(19) Europäisches Patentamt
European Patent Office
Office européen des brevets

(11) **EP 2 546 368 B1**

(12) **EUROPEAN PATENT SPECIFICATION**

(45) Date of publication and mention
of the grant of the patent:
**08.10.2014 Bulletin 2014/41**

(51) Int Cl.:
*C21D 8/00* *(2006.01)*       *C21D 6/00* *(2006.01)*
*C21D 8/02* *(2006.01)*       *C21D 9/46* *(2006.01)*
*C22C 38/00* *(2006.01)*      *C22C 38/02* *(2006.01)*
*C22C 38/06* *(2006.01)*      *C21D 1/22* *(2006.01)*
*C22C 38/04* *(2006.01)*

(21) Application number: **11752998.2**

(22) Date of filing: **28.02.2011**

(86) International application number:
**PCT/JP2011/001163**

(87) International publication number:
**WO 2011/111332 (15.09.2011 Gazette 2011/37)**

(54) **METHOD FOR PRODUCING HIGH-STRENGTH STEEL SHEET**

VERFAHREN ZUR HERSTELLUNG EINES HOCHFESTEN STAHLBLECHS

PROCÉDÉ DE PRODUCTION D'UNE TÔLE D'ACIER HAUTE RÉSISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2010   JP 2010052323**

(43) Date of publication of application:
**16.01.2013   Bulletin 2013/03**

(73) Proprietor: **JFE Steel Corporation
Tokyo, 100-0011 (JP)**

(72) Inventors:
• **MATSUDA, Hiroshi**
  **Tokyo 100-0011 (JP)**
• **FUNAKAWA, Yoshimasa**
  **Tokyo 100-0011 (JP)**
• **TANAKA, Yasushi**
  **Tokyo 100-0011 (JP)**

(74) Representative: **Grünecker, Kinkeldey,
Stockmair & Schwanhäusser
Leopoldstrasse 4
80802 München (DE)**

(56) References cited:
EP-A1- 2 098 600       EP-A2- 1 391 526
WO-A1-2009/099079      WO-A1-2010/029983
JP-A- 2005 336 526     JP-A- 2009 209 450
JP-A- 2010 090 475

**Description**

Technical Field

The present invention relates to a method for manufacturing a high strength steel sheet being excellent in formability in particular ductility and stretch-flangeability and having tensile strength of at least 980 MPa for use in the industrial fields of automobiles, electric appliances and the like.

Prior Art

Improving fuel efficiency of automobiles has been an important task in recent years from the viewpoint of global environment protection. Due to this, there has been vigorous trend toward making vehicle body parts thin by increasing strength of a vehicle body material to reduce weight of a vehicle itself.
In general, proportion of a hard phase such as martensite and bainite with respect to the entire microstructure of a steel sheet must be increased in order to increase strength of the steel sheet. However, enhancing strength of a steel sheet by increasing proportion of a hard phase thereof tends to deteriorate formability of the steel sheet. Therefore, it has been a demand for developing a steel sheet having both high strength and good formability in a compatible manner. There have been developed up to now various types of multi-phase steel sheets such as ferrite-martensite dual phase steel (DP steel), TRIP steel utilizing transformation -induced plasticity of retained austenite, and the like.

In a case where proportion of a hard phase is increased in a multi-phase steel sheet, formability of the steel sheet is strongly influenced by formability of the hard phase because not deformability of polygonal ferrite but deformability of a hard phase itself directly affects formability of the steel sheet in such a case. As a result, formability of a resulting steel sheet significantly deteriorates if formability of the hard phase is insufficient in such a case as described above where proportion of a hard phase is increased. In contrast, deformability of polygonal ferrite dominates formability of a steel sheet to ensure good formability, e.g. good ductility, in spite of poor formability of a hard phase in a case where the steel sheet contains soft polygonal ferrite by a relatively high content and the hard phase by relatively low content.

In view of this, there have conventionally been attempts to: subject a cold rolled steel sheet to a thermal treatment for adjusting content of polygonal ferrite therein generated by annealing process and cooling process thereafter; allow martensite to be formed by water-quenching the steel sheet thus treated; and temper martensite by heating the steel sheet to relatively high temperature and retaining the steel sheet in that state to allow carbides to be formed in martensite as a hard phase, thereby improving formability of martensite.
In such a case of employing such conventional facilities for continuous annealing and water-quenching as described above, however, temperature of a steel sheet after quenching naturally drops to temperature around the water temperature and most of non-transformed austenite experiences martensitic transformation, whereby it is difficult to utilize low-temperature transformed microstructure such as retained austenite and the like. In other words, improvement of formability of hard microstructure totally depends on an effect caused by martensite tempering. Improvement of formability of a steel sheet is thus significantly limited in the case of employing facilities for continuous annealing and water-quenching.

Alternatively, there has been proposed as a steel sheet having a hard phase other than martensite a steel sheet including polygonal ferrite as main phase and bainite and pearlite as hard phases with carbides formed in bainite and pearlite as the hard phases. This steel sheet aims at improving formability thereof not only by use of polygonal ferrite as the main phase but also by formation of carbides in the hard phases to improve formability in particular stretch-flangeability of the hard phases themselves.

JP-A 04-235253, example, proposes a high tensile strength steel sheet having excellent bendability and impact properties, manufactured by specifying alloy components and obtaining steel microstructure constituted of fine and uniform bainite having retained austenite.
JP-A 2004-076114 proposes a multi-phase steel sheet having excellent bake hardenability, manufactured by specifying types and contents of alloy components, obtaining steel microstructure mainly constituted of bainite having retained austenite and controlling content of the retained austenite in bainite.
Further, JP-A 11-256273 proposes a multi-phase steel sheet having excellent impact resistance, manufactured by specifying types and contents of alloy components, obtaining steel microstructure including at least 90% (by area ratio) bainite having retained austenite and 1%-15% retained austenite in bainite and setting hardness (HV) of bainite in a specific range.

Disclosure of the Invention

Problems to be solved by the Invention

The aforementioned steel sheet, however, has problems described below. The component composition described in JP-A 04-235253 cannot ensure a sufficient content of stable retained austenite to express a TRIP effect in a high strain region of a resulting steel sheet when the steel sheet is imparted with strains, whereby the steel sheet exhibits poor ductility prior to reaching plastic instability and poor stretchability, although bendability thereof is relatively good.

The steel sheet of JP-A 2004-076114, although it has good bake hardenability, experiences difficulties not only in achieving high tensile strength (TS) equal to or higher than 980 MPa or 1050 MPa but also in ensuring satisfactory formability such as ductility and stretch-flangeability when strength thereof is ensured or increased, due to its microstructure primarily containing bainite or ferrite with martensite reduced as best as possible.

The steel sheet of JP-A 11-256273 primarily aims at improving impact resistance and microstructure thereof includes as main phase bainite having hardness (HV) of 250 or less by a content exceeding 90%, whereby it is very difficult to achieve tensile strength (TS) of at least 980 MPa by this steel sheet.

It is reasonably assumed that, among automobile parts to be formed by press-forming, automobile structural members having relatively complicated shapes such as a center pillar inner generally require tensile strength of at least 980 MPa and in future possibly at least 1180 MPa class.

WO 2010/029983 discloses a method for obtaining a high-strength steel plate having superior ductility and stretch flangeability and a tensile strength (TS) of 980 MPa or higher, and having 0.17-0.73% C, 3.0% or less Si, 0.5-3.0 or less Mn, 0.1% or less P, 0.07% S, 3.0% or less Al, 0.010% or less N, and 0.7% or more Si + Al, an area ratio of martensite of 10-90% with respect to the entire steel plate composition, a residual austenite amount of 5-50%, and an area ratio of bainitic ferrite in the upper bainite of 5% or less with respect to the entire steel plate composition. Twenty-five percent or more of the aforementioned martensite is tempered martensite, and the total of the area ratio of the aforementioned martensite with respect to the entire steel plate composition, the aforementioned residual austenite amount and the area ratio of the aforementioned bainitic ferrite in the upper bainite with respect to the entire steel plate composition is 65% or more. The area ratio of polygonal ferrite with respect to the entire steel plate composition is 10% or less (including 0%), and the average amount of C in the aforementioned residual austenite is 0.70% or more.

Further, a steel sheet for use as a material of vehicle parts requiring high strength in particular such as a door impact beam, a bumper reinforcement for suppressing deformation during car collision generally necessitates tensile strength of at least 1180 MPa class and in future possibly at least 1470 MPa class.

Various types of steel sheets have been developed as described above as demand for a steel sheet having higher strength increases. It is very important to ensure good stability in mechanical properties of a high strength steel sheet in terms of reliably obtaining good formability of the steel sheet in a stable manner. In view of this, there has been developed, for example, a multi-phase high strength steel sheet including various types of hard microstructures manufactured by utilizing various types of hard microstructures, transformed from non-transformed austenite in a relatively low temperature range, to avoid having an overall microstructure monotonously constituted of a single phase such as martensite. It is very important in such multi-phase microstructure as described above to control fractions of respective hard phases or microstructures with good precision in terms of stabilizing mechanical properties of the resulting multi-phase high strength steel sheet. However, precision in fraction control is not sufficiently high yet in such a case as described above.

Specifically, variation in sheet temperature within a steel sheet tends to occur when the steel sheet is subjected to thermal treatment such as finish annealing. Accordingly, when such a steel sheet having variation in sheet temperature as described above is rapidly cooled to target temperature to allow martensite to be formed by a predetermined content, martensite is not formed at uniform content but formation ratio of martensite rather varies across the steel sheet due to the aforementioned variation in sheet temperature. As a result, there arises variation in mechanical properties of the resulting steel sheet.

The present invention advantageously solves the problem described above and an object thereof is to provide a method for manufacturing a high strength steel sheet having tensile strength (TS) of at least 980 MPa, being excellent in formability in particular ductility and stretch-flangeability and exhibiting good stability in mechanical properties.

Specifically, the present invention aims at manufacturing a high strength steel sheet having high strength and good formability in a compatible manner by transforming a portion of non-transformed austenite into tempered martensite and the rest of the non-transformed austenite into microstructures such as bainite and retained austenite. The high strength steel sheet of the present invention includes a steel sheet of which surface has been further treated by hot dip galvanizing or galvannealing.

"Being excellent in formability" represents in the present invention that a condition that a product of tensile strength and total elongation, i.e (TS × T. EL), is equal to or higher than 20000 MPa · % and a condition that a product of tensile strength and critical hole expansion ration, i.e. (TS × $\lambda$), is equal to or higher than 25000 MPa · % are both satisfied. Further, "Being excellent in stability of mechanical properties" represents in the present invention that the standard deviation $\sigma$ of TS in the sheet widthwise direction and the standard deviation $\sigma$ of T. EL are not lager than 10 MPa and not larger than 2.0%, respectively.

Means for solving the Problem

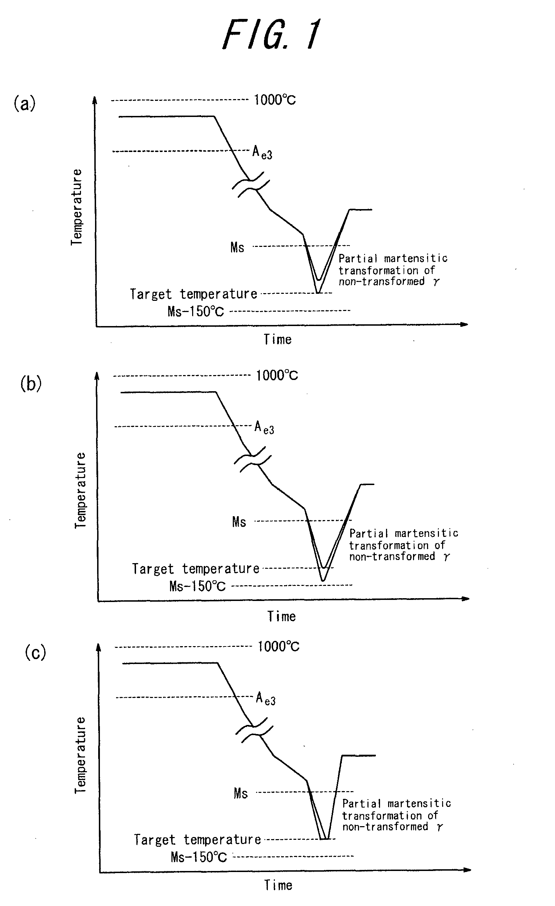

In a case where a desired microstructure, e.g. a predetermined ratio of martensite, is to be formed in a steel sheet, the steel sheet is cooled to particular target temperature which is set accordingly. However, the steel sheet to be thus cooled tends to have variation in sheet temperature due to the preceding thermal treatment as described above. Accordingly, in a case where a such a steel sheet having variation in sheet temperature thereof as described above is cooled and when the temperature of a part of the steel sheet where temperature is lowest (the coldest part) reaches the target temperature as shown in FIG. 1(a), martensite has not been so sufficiently formed in a part of the steel sheet where temperature is highest (the hottest part) as in the coldest part, whereby variation arises in microstructure of the steel sheet. Meanwhile, when the temperature of the hottest part of the steel sheet reaches the target temperature as shown in FIG. 1 (b), martensitic transformation has proceeded too far in the coldest part of the steel sheet, thereby worsening variation in microstructure of the steel sheet.
In short, variation in sheet temperature within a steel sheet results in non-uniform microstructure of steel and thus inevitably in variation in mechanical properties of the steel sheet.
In view of this, the inventors of the present invention studied and discovered that microstructure of a steel sheet is made uniform and thus variation in mechanical properties such as strength of the steel sheet can be reduced by setting thermal treatment conditions around target temperature so as to select the coldest part of a steel sheet as the reference region, cool the coldest part to the target temperature as shown in FIG. 1(c), and retain the steel sheet in a temperature range slightly above target temperature for a predetermined time.
The present invention is based on this discovery.
Specifically, primary features of the present invention are as follows.

(1) A method for manufacturing a high strength steel sheet, comprising the steps of: heating a steel sheet containing at least 0.10 mass % of carbon to either temperature in the austenite single phase region or temperature in the (austenite + ferrite) two-phase region; cooling the steel sheet to cooling stop temperature as target temperature set within a cooling temperature region ranging from Ms to (Ms - 150°C) to allow a portion of non-transformed austenite to proceed to martensitic transformation; and heating the sheet temperature to temper said martensite, characterized in that the method further comprises retaining the coldest part in the sheet widthwise direction of the steel sheet at temperature in a temperature range from the cooling stop temperature as the target temperature to (the cooling stop temperature + 15°C) for a period ranging from 15 seconds to 100 seconds (inclusive of 15 seconds and 100 seconds),
wherein "Ms" represents martensitic transformation start temperature and said cooling temperature region is exclusive of Ms and inclusive of (Ms - 150°C).
(2) The method for manufacturing a high strength steel sheet of (1) above, further comprising subjecting the steel sheet to hot dip galvanizing process or galvannealing process either: between completion of the heating process to temperature in either the austenite single phase region or the (austenite + ferrite) two-phase region and completion of the cooling process; or during the tempering process; or during a process after the tempering process.
(3) The method for manufacturing a high strength steel sheet of (1) or (2) above, wherein the steel sheet has a composition including by mass %,

C:   0.10% to 0.73% (inclusive of 0.10% and 0.73%),
Si:   3.0% or less,
Mn   0.5% to 3.0% (inclusive of 0.5% and 3.0%),
P:   0.1% or less,
S:   0.07% or less,
Al:   3.0% or less,
N:   0.010% or less, and

remainder as Fe and incidental impurities.
(4) The method for manufacturing a high strength steel sheet of (3) above, wherein the composition of the steel sheet further includes by mass % at least one type of elements selected from

Cr:   0.05% to 5.0% (inclusive of 0.05% and 5.0%),
V:   0.005% to 1.0% (inclusive of 0.005% and 1.0%), and
Mo:   0.005% to 0.5% (inclusive of 0.005% and 0.5%).

(5) The method for manufacturing a high strength steel sheet of (3) or (4) above, wherein the composition of the steel sheet further includes by mass % at least one type of elements selected from

Ti:     0.01% to 0.1% (inclusive of 0.01 % and 0.1%), and
Nb:    0.01% to 0.1% (inclusive of 0.01 % and 0.1%).

(6) The method for manufacturing a high strength steel sheet of any of (3) to (5) above, wherein the composition of the steel sheet further includes, by mass %, B: 0.0003% to 0.0050% (inclusive of 0.0003% and 0.0050%).
(7) The method for manufacturing a high strength steel sheet of any of (3) to (6) above, wherein the composition of the steel sheet further includes by mass % at least one type of elements selected from

Ni:    0.05% to 2.0% (inclusive of 0.05% and 2.0%), and
Cu:    0.05% to 2.0% (inclusive of 0.05% and 2.0%)

(8) The method for manufacturing a high strength steel sheet of any of (3) to (7) above, wherein the composition of the steel sheet further includes by mass % at least one type of elements selected from

Ca:     0.001 % to 0.005% (inclusive of 0.001% and 0.005%), and
REM:   0.001 % to 0.005% (inclusive of 0.001 % and 0.005%).

Effect of the Invention

According to the present invention, it is possible to provide a high strength steel sheet being excellent in formability and exhibiting excellent stability in mechanical properties thereof. As a result, it is possible to reduce thickness of a steel sheet and weight thereof, thereby effectively reducing weight of an automobile body.

Brief Description of the Drawing

FIGS. 1(a)-1(c) are diagrams each showing a temperature pattern in a thermal treatment for forming martensite by a predetermined ratio by heating and rapidly cooling a steel sheet.
FIG. 2 is a diagram showing a temperature pattern in a thermal treatment in the method for manufacturing a high strength steel sheet according to the present invention.

Best Embodiment for carrying out the Invention

The present invention will be described in detail hereinafter.
First, a steel sheet material as a starting steel material for manufacturing a high strength steel sheet according to the present invention is prepared by subjecting a steel sheet having a component composition adjusted to contain at least 0.10 mass % of carbon ("mass %" for a steel sheet component will be abbreviated to "%" hereinafter) to hot rolling process and optionally cold rolling process. These hot rolling and cold rolling processes are not particularly restricted and may be carried out according to the conventional methods.
The high strength steel sheet of the present invention needs to contain at least 0.10% of carbon therein because carbon is an essential element in terms of increasing strength of the steel sheet, ensuring necessitated content of martensite and making austenite be retained at the room temperature.
Typical manufacturing conditions of a cold rolled steel sheet as a steel sheet material are as follows.
Manufacturing conditions of a cold rolled steel sheet include, for example: heating a steel material to temperature in the range of 1000°C to 1300°C (inclusive of 1000°C and 1300°C); finishing hot rolling at temperature in the range of 870°C to 950°C (inclusive of 870°C and 950°C); and subjecting a hot rolled steel sheet thus obtained to coiling at temperature in the range of 350°C to 720°C (inclusive of 350°C and 720°C), pickling, and cold rolling at rolling reduction rate in the range of 40% to 90% (inclusive of 40% and 90%) to obtain a cold rolled steel sheet (a steel sheet material).
It is acceptable in preparing a steel sheet material for use in the present invention to skip at least a part of the hot rolling process by employing thin slab casting, strip casting or the like.
A high strength steel sheet is then manufactured from the (cold rolled) steel sheet material thus obtained, according to the method of the present invention including following processes.

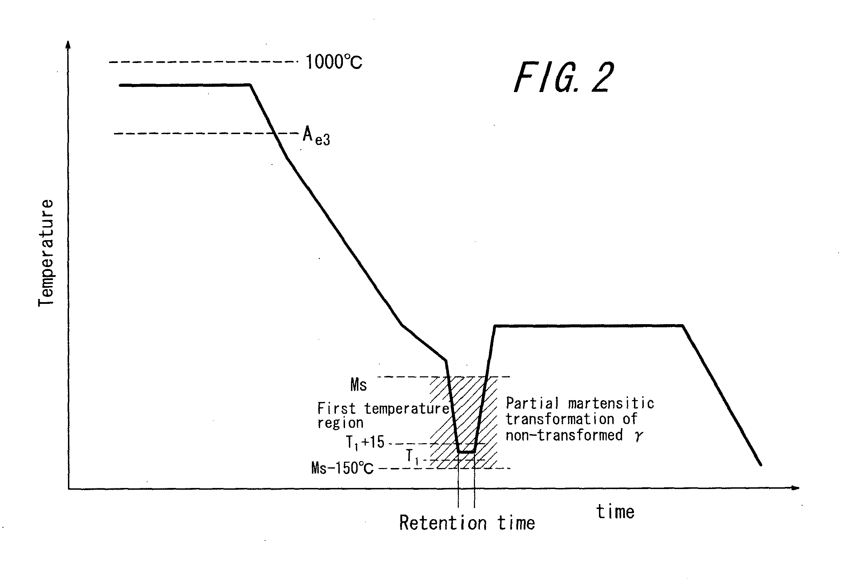

FIG. 2 shows one example of temperature pattern in thermal treatment of the method for manufacturing a high strength steel sheet of the present invention. A steel sheet material is heated for annealing to either temperature in the austenite single phase region or temperature in the (austenite + ferrite) two-phase region in the present invention, as shown in FIG. 2. The annealing temperature is not particularly restricted as long as it is equal to or higher than the temperature within the (austenite + ferrite) two-phase region. However, the annealing temperature exceeding 1000°C causes austenite grains to grow excessively, thereby coarsening gains of respective microstructures generated by cooling thereafter, which microstructures constitute a resulting steel sheet, to eventually deteriorate toughness and the like of the steel sheet. Accordingly, the annealing temperature is preferably 1000°C or lower.

When the annealing time is shorter than 15 seconds, carbides already existing in a steel sheet prior to the annealing may not be dissolved sufficiently and/or reverse transformation of the microstructures of the steel sheet into austenite may not proceed sufficiently. When the annealing time exceeds 600 seconds, the processing cost increases due to too much energy consumption. Accordingly, the annealing time is to be in the range of 15 seconds to 600 seconds (inclusive of 15 seconds and 600 seconds).

The steel sheet thus annealed is cooled to a first temperature region ranging from (martensite start temperature Ms - 150°C) to Ms (inclusive of (Ms - 150°C) and exclusive of Ms) as shown in FIG. 2. Cooling stop temperature: T1 (which will be referred to as "T1" hereinafter) as the target temperature is set within the first temperature region.
The purpose of this cooling process is to cool the steel sheet below the Ms point such that a portion of austenite proceeds to martensitic transformation. In a case where the lower limit of the first temperature region is set to be below (Ms - 150°C), most of non-transformed austenite proceeds to martensitic transformation by the cooling process and thus it is not possible to utilize microstructures like retained austenite which are effective in terms of improving formability of a steel sheet.
In a case where the upper limit of the first temperature region is set to exceed Ms point, martensite may not have been formed by sufficient content in a steel sheet when the cooling process is stopped, whereby tempered martensite cannot be reliably obtained by sufficient content in the heating or tempering process thereafter. Accordingly, the first temperature region, within which T1 is set, is to range from (Ms - 150°C) to Ms, wherein (Ms - 150°C) is inclusive and Ms is exclusive. The average cooling rate of a steel sheet until the temperature of the steel sheet drops to the first temperature region is not particularly restricted in the present invention. However, the cooling rate lower than 3°C/s ("°C/s" represents "°C/second" in the present invention) results in excess formation and growth of polygonal ferrite and precipitation of pearlite and the like, which makes it impossible to obtain the desired microstructure of a steel sheet. Accordingly, the average cooling rate from the annealing temperature to the first temperature region is to be at least 3°C/s.

It is particularly important in the present invention that, when a portion of non-transformed austenite is made to proceed to martensitic transformation by cooling, temperature of the coldest part in the sheet widthwise direction of a steel sheet is retained within the first temperature region (indicated as a hatched area in FIG. 2) and also in a temperature range or sub-region ranging from the target cooling stop temperature T1 to (T1 + 15°C). In a case where the temperature of the coldest part of the steel sheet is below T1°C, non-transformed austenite proceeds to martensitic transformation excessively in some parts of the steel sheet to form too much martensite exceeding the target content thereof expected at the target temperature T1. As a result, variation in martensite cannot be eliminated and the desired properties cannot be stably obtained in these parts of the steel sheet even after retaining the steel sheet for a predetermined period. In a case where the temperature of the coldest part of the steel sheet exceeds (T1 + 15°C), martensite is not formed sufficiently to fail to meet the target content thereof expected at the target temperature T1 in some part of the steel sheet. As a result, there arise variations in contents of bainite, retained austenite and tempered martensite formed during the heating or tempering process thereafter, whereby the desired properties cannot be stably obtained in the resulting steel sheet.

It is necessary to retain the coldest part of a steel sheet at temperature in the range of T1 to (T1 + 15°C) for a period ranging from 15 seconds to 100 seconds (inclusive of 15 seconds and 100 seconds) in the present invention. Sheet temperature of parts other than the coldest part of a steel sheet may not sufficiently drop and these parts may fail to have desired steel sheet microstructure, thereby generating variation in formability within the steel sheet, in a case where the retention time of the coldest part of the steel sheet at temperature in the range of T1 to (T1 + 15°C) is shorter than 15 seconds. The retention time exceeding 100 seconds would simply be meaninglessly prolonged processing time because then an effect of making sheet temperature of parts other than the coldest part of a steel sheet follow the temperature of the coldest part, caused by the retention time, reaches a plateau.

"The coldest part" of a steel sheet represents the part at which sheet temperature is coldest in the sheet widthwise direction of the steel sheet in the present invention. The coldest part of a steel sheet is normally an edge portion of the steel sheet but may be another portion, depending on the characteristics of a production line. In a case where there is a possibility that a portion other than an edge portion of a steel sheet will be the coldest part of the steel sheet, it is preferable that the steel sheet is in advance tested to investigate the coldest part thereof so that sheet temperature of the coldest part can be reliably controlled during the actual manufacturing process.
Manufacturing facilities are preferably equipped with a thermometer capable of confirming sheet temperature distribution across the entire sheet width of a steel sheet in terms of achieving reliable measurement of actual temperature of the coldest part of the steel sheet. If manufacturing facilities lack such a thermometer as described above, these facilities can still control thermal processing conditions according to the present invention by finding out the coldest part of a steel sheet by an experiment in advance as described above and measuring and controlling the temperature of the coldest part of the steel sheet thus determined.
Further, sectioning a steel sheet in the sheet widthwise direction into several blocks and carrying out feedback control of respective sheet temperatures in the respective blocks are effective in terms of reliably keeping sheet temperature of the steel sheet, which is being retained, within the temperature range of T1 to (T1 + 15°C) in the present invention.

As described above, it is possible to remarkably decrease variation in mechanical properties such as tensile strength within a high strength steel sheet by retaining the coldest part of the steel sheet at predetermined temperature for a predetermined period.

The mechanism of such decrease in variation as described above is not clear. The inventors of the present invention assume that: if concentration of martensite formed within a steel sheet has varied because temperatures of some parts of the steel sheet dropped too low from the Ms point due to variation in sheet temperature in the sheet thickness direction and the widthwise direction with respect to the sheet-feeding direction, magnitude of martensite formation within the steel sheet can be made stable by carrying out the aforementioned unique thermal processing of the present invention; and as a result magnitude of martensitic transformation across the entire steel sheet is made uniform and mechanical properties of the steel sheet are rendered stable across the entire steel sheet.

Next, the steel sheet thus retained at temperature in the first temperature region is heated by a conventional method and subjected to martensite-tempering process as shown in FIG. 2.

Although a temperature range for this tempering process is not particularly restricted, the tempering temperature is preferably equal to or higher than 200°C in view of tempering efficiency of martensite. In a case where the cooling stop temperature is equal to or higher than 200°C, the heating process for tempering can be omitted by simply retaining a steel sheet at temperature in the temperature range equal to or higher than 200°C. The tempering temperature is preferably equal to or lower than 570°C because carbides are precipitated from non-transformed austenite and desired microstructures may not be obtained when the upper limit of the tempering temperature exceeds 570°C.

Retention time after raising the temperature of a steel sheet to the tempering temperature is not particularly restricted. However, the retention time shorter than 5 seconds may result in insufficient tempering of martensite, which makes it impossible to obtain the desired microstructures in a resulting steel sheet and possibly deteriorates formability of the steel sheet. The retention time exceeding 1000 seconds, for example, causes carbides to be precipitated from non-transformed austenite and stable retained austenite having relatively high carbon concentration cannot be obtained as the final microstructure of a resulting steel sheet, whereby the resulting steel sheet may not have at least one of desired strength and ductility. Accordingly, the retention time of retaining a steel sheet for tempering is preferably in the range of 5 seconds to 1000 seconds (inclusive of 5 seconds and 1000 seconds).

The retention temperature in the aforementioned thermal and tempering processes need not be constant and may vary within such a predetermined temperature range as described above in the present invention. In other words, variation in the retention temperature within the predetermined temperature range does not adversely affect the spirit of the present invention. Similar tolerance is applied to the cooling rate and the cooling rate may vary to some extent. Further, the steel sheet of the present invention may be subjected to the relevant thermal treatments in any facilities as long as the required thermal history is satisfied. Yet further, subjecting a surface of the steel sheet to temper-rolling for shape correction and/or a surface treatment such as electrolytic plating after the thermal treatment is included within the scope of the present invention.

The method for manufacturing a high strength steel sheet of the present invention may further include subjecting the steel sheet to hot dip galvanizing process or galvannealing process (galvannealing process is combination of hot dip galvanizing and alloying process thereafter). In the case of carrying out hot dip galvanizing process or galvannealing process during the martensite-tempering process in the tempering temperature range, the total retention time at temperature in the tempering temperature region, including processing time for the hot dip galvanizing process or the galvannealing process, is still to be within the range of 5 seconds to 1000 seconds (inclusive of 5 seconds and 1000 seconds).

The hot dip galvanizing process and the galvannealing process are preferably carried out in a continuous galvanizing line.

In the method for manufacturing a high strength steel sheet of the present invention, it is acceptable to complete the method to the final thermal treatment to obtain a high strength steel sheet and then subject the high strength steel sheet to hot dip galvanizing process and galvannealing process later.

A method for subjecting the steel sheet to hot dip galvanizing process and a method for subjecting the steel sheet to galvannealing process are typically carried out as follows.

A steel sheet is immersed in a plating bath and then coating weight is adjusted by gas wiping or the like. Aluminum content dissolved in the plating bath is preferably in the range of 0.12 mass % and 0.22 mass % (inclusive of 0.12 mass % and 0.22 mass %) in hot dip galvanizing and in the range of 0.08 mass % and 0.18 mass % (inclusive of 0.08 mass % and 0.18 mass %) in galvannealing, respectively. Temperature of a plating bath may be in the range of 450°C to 500°C (inclusive of 450°C and 500°C) in hot dip galvanizing. In a case where galvannealing is further carried out, temperature during the alloying process is preferably 570°C or lower.

Alloying temperature exceeding 570°C results in precipitation of carbides from non-transformed austenite and possibly formation of pearlite, which may lead to failure in obtaining at least one of good strength and good formability, as well as deterioration of anti-powdering property of a coating layer in a resulting coated steel sheet. However, the galvannealing process may not proceed smoothly when alloying temperature is below 450°C. Accordingly, alloying temperature is preferably equal to or higher than 450°C.

Coating weight per one surface of a steel sheet is preferably in the range of 20 g/m$^2$ to 150 g/m$^2$ (inclusive of 20 g/m$^2$ and 150 g/m$^2$) in a case where the steel sheet is subjected to coating such as galvanizing in the present invention. Coating weight less than 20 g/m$^2$ results in poor corrosion resistance, while a corrosion resisting effect reaches a plateau and production cost meaninglessly increases when the coating weight exceeds 150 g/m$^2$.

Alloy degree of a coating layer (i.e. Fe % or Fe content in a coating layer) is preferably in the range of 7 % to 15 % (inclusive of 7 % and 15 %). Alloy degree of a coating layer less than 7 % results in uneven alloying to deteriorate appearance quality of a resulting coated steel sheet and/or formation of what is called $\zeta$ phase in the coating layer to deteriorate sliding properties of a resulting coated steel sheet. Alloy degree of a coating layer exceeding 15 mass % results in excess formation of hard and brittle $\Gamma$ phase to deteriorate coating adhesion properties of a resulting coated steel sheet.

In addition to the foregoing descriptions of the primary features regarding conditions in manufacturing a high strength steel sheet of the present invention, a component composition of a steel sheet preferable as a steel sheet material for the manufacturing method of the present invention will be described next.

C: 0.10% to 0.73% (inclusive of 0.10% and 0.73%)

At least 0.10% of carbon is required in the steel sheet of the present invention as described above. However, carbon content exceeding 0.73% significantly hardens a welded portion and surrounding portions affected by welding heat, thereby deteriorating weldability of a resulting steel sheet. Accordingly, the upper limit of carbon content in steel is preferably 0.73%. Carbon content in steel is more preferably in the range of 0.15% to 0.48% (exclusive of 0.15% and inclusive of 0.48%).

Si: 3.0% or less (including zero %)

Silicon is a useful element which contributes to increasing strength of a steel sheet through solute strengthening. However, silicon content in steel exceeding 3.0% deteriorates: formability and toughness due to increase in content of solute Si in polygonal ferrite and bainitic ferrite; and coatability and coating adhesion of plating when the steel sheet is subjected to hot dip galvanizing. Accordingly, Si content in steel is to be 3.0% or less, preferably 2.6% or less, and more preferably 2.2% or less.

Silicon content in steel is preferably at least 0.5% because silicon is a useful element in terms of suppressing formation of carbide and facilitating formation of retained austenite. However, silicon need not be added and thus Si content may be zero % in a case where formation of carbide is suppressed by only aluminum.

Mn: 0.5% to 3.0% (inclusive of 0.5% and 3.0%)

Manganese is an element which effectively increases steel strength. Manganese content less than 0.5% in steel causes carbide to be precipitated at temperature higher than the temperature at which bainite and martensite are formed when a steel sheet is cooled after annealing, thereby making it impossible to reliably obtain a sufficient content of hard phase contributing to steel strengthening. Mn content exceeding 3.0% may deteriorate forgeability of steel. Accordingly, Mn content in steel is preferably in the range of 0.5% to 3.0% (inclusive of 0.5% and 3.0%) and more preferably in the range of 1.5% to 2.5% (inclusive of 1.5% and 2.5%).

P: 0.1% or less

Phosphorus is a useful element in terms of increasing steel strength. However, phosphorus content in steel exceeding 0.1%: makes steel brittle due to grain boundary segregation of phosphorus to deteriorate impact resistance of a resulting steel sheet; and significantly slows galvannealing (alloying) rate down in a case the steel sheet is subjected to galvannealing. Accordingly, phosphorus content in steel is to be 0.1 % or less and preferably 0.05% or less.

The lower limit of phosphorus content in steel is preferably around 0.005% because an attempt to reduce the phosphorus content below 0.005% would significantly increase production cost, although phosphorus content in steel is to be decreased as best as possible.

S: 0.07% or less

Sulfur forms inclusion such as MnS and may be a cause of deterioration of impact resistance and generation of cracks along metal flow at a welded portion of a steel sheet. It is thus preferable that sulfur content in steel is reduced as best as possible. However, decreasing sulfur content in steel to an exorbitantly low level would increase production cost. Accordingly, presence of sulfur in steel is tolerated unless sulfur content in steel exceeds 0.07% or so. Sulfur content in steel is preferably 0.05% or less, and more preferably 0.01% or less. The lower limit of sulfur content in steel is around 0.0005% in view of production cost because decreasing sulfur content in steel below 0.0005% would significantly increase production cost.

Al: 3.0% or less

Aluminum is a useful element added as a deoxidizing agent in a steel manufacturing process. However, aluminum content exceeding 3.0% may deteriorate ductility of a steel sheet due to too much inclusion in the steel sheet. Accordingly, aluminum content in steel is to be 3.0% or less and preferably 2.0% or less.
Further, aluminum is a useful element in terms of suppressing formation of carbide and facilitating formation of retained austenite. Aluminum content in steel is preferably at least 0.001 % and preferably at least 0.005% to sufficiently obtain this good effect of aluminum.
Aluminum content in the present invention represents content of aluminum contained in a steel sheet after deoxidization.

N: 0.010% or less

Nitrogen is an element which most significantly deteriorates anti-aging property of steel and thus content thereof in steel is preferably decreased as best as possible. However, presence of nitrogen in steel is tolerated unless nitrogen content in steel exceeds 0.010% or so. The lower limit of nitrogen content in steel is around 0.001% in view of production cost because decreasing nitrogen content in steel below 0.001% would significantly increase production cost.
The composition of the steel sheet of the present invention may further include, in addition to the aforementioned optional components other than carbon, following components in an appropriate manner.
At least one type of element selected from Cr: 0.05% to 5.0% (inclusive of 0.05% and 5.0%), V: 0.005% to 1.0% (inclusive of 0.005% and 1.0%), and Mo: 0.005% to 0.5% (inclusive of 0.005% and 0.5%)
Chromium, vanadium and molybdenum are elements which each suppress formation of pearlite when a steel sheet is cooled from the annealing temperature. These good effects of Cr, V and Mo are obtained when contents of Cr, V and Mo in steel are at least 0.05%, at least 0.005% and at least 0.005%, respectively. However, contents of Cr, V and Mo in steel exceeding 5.0%, 1.0% and 0.5%, respectively, results in too much formation of hard martensite, which strengthens a resulting steel sheet too much to make the steel sheet brittle. Accordingly, in a case where the composition of the steel sheet includes at least one of Cr, V and Mo, contents thereof are to be Cr: 0.05% to 5.0% (inclusive of 0.05% and 5.0%), V: 0.005% to 1.0% (inclusive of 0.005% and 1.0%), and Mo: 0.005% to 0.5% (inclusive of 0.005% and 0.5%).

At least one type of element selected from Ti: 0.01 % to 0.1 % (inclusive of 0.01% and 0.1 %), and Nb: 0.01% to 0.1% (inclusive of 0.01% and 0.1%)

Titanium and niobium are useful elements in terms of precipitate strengthening/hardening of steel. Titanium and niobium can each cause this effect when contents thereof in steel are at least 0.01%, respectively. In a case where at least one of Ti content and Nb content in steel exceeds 0.1%, formability and shape fixability of a resulting steel sheet deteriorate. Accordingly, in a case where the steel sheet composition includes Ti and Nb, contents thereof are to be Ti: 0.01 % to 0.1 % (inclusive of 0.01% and 0.1%), and Nb: 0.01% to 0.1 % (inclusive of 0.01% and 0.1 %), respectively.

B: 0.0003% to 0.0050% (inclusive of 0.0003% and 0.0050%)

Boron is a useful element in terms of suppressing formation and growth of ferrite from austenite grain boundary. This good effect of boron can be obtained when boron content in steel is at least 0.0003%. However, boron content in steel exceeding 0.0050% deteriorates formability of a resulting steel sheet. Accordingly, when the steel sheet composition includes boron, boron content in steel is to be B: 0.0003% to 0.0050% (inclusive of 0.0003% and 0.0050%).

At least one type of elements selected from Ni: 0.05% to 2.0% (inclusive of 0.05% and 2.0%), and Cu: 0.05% to 2.0% (inclusive of 0.05% and 2.0%)

Nickel and copper are elements which each effectively increase strength of steel. Further, these elements each cause an effect of facilitating internal oxidation of a surface layer portion of a steel sheet to improve coating adhesion property in a case the steel sheet is subjected to galvanizing or galvannealing. These good effects of Ni and Cu are obtained when contents thereof in steel are at least 0.05%, respectively. In a case where at least one of Ni content and Cu content in steel exceeds 2.0%, formability of a resulting steel sheet deteriorates. Accordingly, in a case where the steel sheet composition includes Ni and Cu, contents thereof are to be Ni: 0.05% to 2.0% (inclusive of 0.05% and 2.0%), and Cu: 0.05% to 2.0% (inclusive of 0.05% and 2.0%), respectively.

At least one element selected from Ca: 0.001% to 0.005% (inclusive of 0.001% and 0.005%) and REM: 0.001% to 0.005% (inclusive of 0.001% and 0.005%) Calcium and REM are useful elements in terms of making sulfides spherical to lessen adverse effects of the sulfides on stretch flangeability of a steel sheet. Calcium and REM can each cause this effect when contents thereof in steel are at least 0.001%, respectively. In a case where at least one of Ca content and REM content in steel exceeds 0.005%, inclusions increase to cause surface defects, internal defects and the like of a resulting steel sheet. Accordingly, in a case where the steel sheet composition includes Ca and REM, contents thereof are to be Ca: 0.001% to 0.005% (inclusive of 0.00 1 % and 0.005%) and REM: 0.001 % to 0.005% (inclusive of 0.001 % and 0.005%), respectively.

Components other than those described above are Fe and incidental impurities in the steel sheet of the present invention. However, the present invention does not exclude a possibility that the steel composition thereof includes a component other than those described above unless inclusion of the component adversely affects the effect of the present invention.

Examples

(Example 1)

The present invention will be described further in detail by Examples hereinafter. These Examples, however, do not restrict the present invention by any means. Needless to say, any changes in structure can be made within the scope of the present invention without adversely affecting the effect of the present invention.

A steel material, obtained from steel having a component composition as shown in Table 1 by using ingot techniques, was heated to 1200°C and subjected to finish hot rolling at 870°C to obtain a hot rolled steel sheet. The hot rolled steel sheet was subjected to coiling at 650°C, pickling, and cold rolling at rolling reduction rate of 65% to obtain a cold rolled steel sheet having sheet thickness: 1.2 mm. The cold rolled steel sheet thus obtained was subjected to thermal treatment under the conditions shown in Table 2.

The thermal treatment temperatures (the annealing temperatures) shown in Table 2 were unanimously within either the austenite single phase region or the (austenite + ferrite) two-phase region, except for that of sample No. 4.

Some of the cold rolled steel sheet samples were each subjected to hot dip galvanizing or galvannealing either during the tempering process or after the tempering process. The hot dip galvanizing process was carried out such that respective surfaces of a cold rolled steel sheet sample were coated at coating weight (per one surface): 50g/m$^2$ at plating path temperature: 463°C. The galvannealing process was carried out such that respective surfaces of a cold rolled steel sheet sample were first subjected to coating at coating weight (per one surface): 50g/m$^2$ at plating path temperature: 463°C and then alloying, under alloying conditions adjusted as required, at temperature equal to or lower than 550°C so as to achieve alloy degree (i.e. Fe % or Fe content in a coating layer) of 9 mass %.

Each of the steel sheet samples thus obtained was subjected to temper-rolling at rolling reduction rate (elongation rate): 0.3% either directly after the thermal treatment in a case where the sample was not subjected to any coating process or after the hot dip galvanizing process or the galvannealing process in a case where the sample was subjected to a coating process.

[Table 1]

Table 1

| Steel type | Steel sheet component (mass %) | | | | | | | | | | | | | | | | | Note |
|---|---|---|---|---|---|---|---|---|---|---|---|---|---|---|---|---|---|---|
| | C | Si | Mn | Al | P | S | N | Cr | V | Mo | Ti | Nb | B | Ni | Cu | Ca | REM | |
| A | 0.400 | 1.99 | 1.98 | 0.036 | 0.012 | 0.0040 | 0.0023 | | - | - | - | - | - | - | - | - | - | Invention steel |
| B | 0.310 | 2.02 | 1.52 | 0.040 | 0.010 | 0.0030 | 0.0041 | - | - | - | - | - | - | - | - | - | - | Invention steel |
| C | 0.090 | 0.80 | 2.50 | 0.042 | 0.015 | 0.0050 | 0.0040 | - | - | - | - | - | - | - | - | - | - | Comparative steel |
| D | 0.302 | 2.01 | 2.03 | 0.039 | 0.009 | 0.0040 | 0.0037 | - | - | - | - | - | - | - | - | - | - | Invention steel |
| E | 0.402 | 1.80 | 0.50 | 0.041 | 0.010 | 0.0040 | 0.0037 | 0.9 | - | - | - | - | - | - | - | - | - | Invention steel |
| F | 0.498 | 2.05 | 1.50 | 0.039 | 0.013 | 0.0040 | 0.0032 | - | 0.05 | - | - | - | - | - | - | - | - | Invention steel |
| G | 0.604 | 1.98 | 1.49 | 0.041 | 0.010 | 0.0030 | 0.0039 | - | - | - | - | - | - | - | - | - | - | Invention steel |
| H | 0.298 | 2.00 | 1.81 | 0.037 | 0.029 | 0.0030 | 0.0041 | - | - | 0.03 | - | - | - | - | - | - | - | Invention steel |
| I | 0.301 | 2.41 | 1.92 | 0.037 | 0.029 | 0.0030 | 0.0041 | - | - | - | - | 0.03 | - | - | - | - | - | Invention steel |
| J | 0.412 | 1.10 | 1.52 | 1.02 | 0.013 | 0.0030 | 0.0037 | - | - | - | - | - | - | 0.20 | 0.20 | - | - | Invention steel |
| K | 0.480 | 1.70 | 1.30 | 0.038 | 0.012 | 0.0030 | 0.0041 | - | - | - | 0.020 | - | 0.0015 | - | - | - | - | Invention steel |
| L | 0.185 | 1.52 | 2.33 | 0.041 | 0.011 | 0.0040 | 0.0029 | - | - | - | - | - | - | - | - | 0.002 | - | invention steel |
| M | 0.145 | 1.51 | 2.09 | 0.039 | 0.013 | 0.0030 | 0.0040 | - | - | - | - | - | - | - | - | - | 0.003 | Invention steel |

[Table 2]

Table 2

| Sample No. | Steel type | Annealing process Temperature (°C) | Annealing process Time (s) | Average cooling rate down to first temperature region (°C/s) | Target cooling stop temperature: T1 (°C) | Retention time of the coldest part (s) | Temperature range of the coldest part (°C) | Ms (°C) | Ms-150°C (°C) | Tempering process Temperature (°C) | Tempering process Time (s) | Note |
|---|---|---|---|---|---|---|---|---|---|---|---|---|
| 1 | A | 900 | 300 | 18 | 250 | 18 | 250~260 | 325 | 175 | 400 | 120 | Present Example |
| 2 | B | 900 | 200 | 20 | 400 | 30 | 393~400 | 378 | 228 | 420 | 100 | Comparative Example |
| 3 | B | 890 | 150 | 50 | 10 | 20 | 102~110 | 378 | 228 | 400 | 90 | Comparative Example |
| 4 | B | 670 | 200 | 15 | 250 | 20 | 252~260 | 378 | 228 | 400 | 120 | Comparative Example |
| 5 | B | 900 | 180 | 20 | 270 | 20 | 270~273 | 378 | 228 | 400 | 90 | Present Example |
| 6 | B | 900 | 180 | 15 | 240 | 25 | 210~245 | 378 | 228 | 400 | 90 | Comparative Example |
| 7 | C | 900 | 180 | 20 | 290 | 20 | 290~294 | 443 | 293 | 360 | 90 | Comparative Example |
| 8 | D | 890 | 200 | 15 | 250 | 18 | 252~258 | 366 | 216 | 390 | 90 | Present Example |
| 9 | E | 880 | 300 | 20 | 250 | 20 | 251~259 | 358 | 208 | 410 | 120 | Present Example |
| 10 | F | 870 | 400 | 15 | 190 | 20 | 191~201 | 297 | 147 | 400 | 300 | Present Example |
| 11 | G | 870 | 500 | 18 | 170 | 30 | 171~182 | 252 | 102 | 420 | 400 | Present Example |
| 12 | H | 900 | 200 | 20 | 225 | 20 | 226~232 | 364 | 214 | 400 | 180 | Present Example |

(continued)

| Sample No. | Steel type | Annealing process | | Average cooling rate down to first temperature region | Target cooling stop temperature: T1 | Retention time of the coldest part | Temperature range of the coldest part | Ms | Ms-150°C | Tempering process | | Note |
|---|---|---|---|---|---|---|---|---|---|---|---|---|
| | | Temperature | Time | | | | | | | Temperature | Time | |
| | | (°C) | (s) | (°C/s) | (°C) | (s) | (°C) | (°C) | (°C) | (°C) | (s) | |
| 13 | I | 900 | 200 | 20 | 220 | 20 | 220~233 | 348 | 198 | 410 | 350 | Present Example |
| 14 | J | 900 | 200 | 20 | 220 | 20 | 221~227 | 318 | 168 | 400 | 300 | Present Example |
| 15 | K | 880 | 300 | 15 | 165 | 18 | 167~174 | 299 | 149 | 400 | 400 | Present Example |
| 16 | L | 900 | 200 | 35 | 280 | 16 | 282~285 | 407 | 257 | 390 | 90 | Present Example |
| 17 | M | 900 | 200 | 20 | 290 | 20 | 290~299 | 412 | 262 | 400 | 100 | Present Example |

Various properties of each of the steel sheet samples and the coated steel sheet samples thus obtained were evaluated by following methods.
A tensile test was carried out according to JIS Z 2241 by using a JIS No. 5 test piece collected from the steel sheet sample in a direction orthogonal to the rolling direction thereof. TS (tensile strength) and T.EL (total elongation) of the test piece were measured and the product of the tensile strength and the total elongation (TS $\times$ T. EL) was calculated to evaluate balance between strength and formability (ductility) of the steel sheet sample. TS $\times$ T. EL $\geq$ 20000 (MPa · %) is evaluated to be good balance between strength and elongation in the present invention.

Stretch flangeability of each of the steel sheet samples and the coated steel sheet samples thus obtained was evaluated according to The Japan Iron and Steel Federation Standard (JFS) T1001 by: cutting the steel sheet sample into a test piece (100mm $\times$ 100mm); forming a hole (diameter: 10mm) by punching in the test piece with clearance corresponding to 12% of the sheet thickness between a steel sheet edge and the hole; pushing a 60° cone punch into the hole in a state where the test piece was set on a die (inner diameter: 75mm) with fold pressure: 88.2 kN exerted thereon; measuring a critical hole diameter at crack initiation; and calculating a critical hole expansion ratio $\lambda$ (%) according to formula (1) below.

$$\text{Critical hole expansion ratio } \lambda\ (\%) = \{(D_f - D_o)/D_o\} \times 100 \qquad \cdots \quad (1)$$

In formula (1), $D_f$ represents critical hole diameter at crack initiation (mm) and Do represents the initial hole diameter (mm). Further, balance between strength and stretch-flangeability of the steel sheet sample was evaluated by calculating the product of strength and critical hole expansion ratio (TS $\times$ $\lambda$) by using $\lambda$ thus determined through measurement. Stretch-flangeability is evaluated to be good when TS $\times$ $\lambda$ $\geq$ 25000 (MPa · %).

The results obtained by the measurements described above are shown in Table 3.

[Table 3]

Table 3

| Sample No. | Steel type | TS (MPa) | T.EL (%) | λ (%) | TS × T.EL (MPa·%) | TS × λ (MPa·%) | Note |
|---|---|---|---|---|---|---|---|
| 1 | A | 1477 | 22 | 18 | 32494 | 26586 | Present Example |
| 2 | B | 1212 | 20 | 17 | 24240 | <u>20604</u> | <u>Comparative Example</u> |
| 3 | B | 1520 | 11 | 46 | <u>16720</u> | 69920 | <u>Comparative Example</u> |
| 4 | B | <u>836</u> | 22 | 40 | <u>18392</u> | 33440 | <u>Comparative Example</u> |
| 5 | B | 1382 | 16 | 44 | 22112 | 60808 | Present Example |
| 6 | B | 1451 | 13 | 44 | <u>18863</u> | 63844 | <u>Comparative Example</u> |
| 7 | <u>C</u> | 1119 | 8 | 50 | <u>8952</u> | 55950 | <u>Comparative Example</u> |
| 8 | D | 1370 | 16 | 37 | 21920 | 50690 | Present Example |
| 9 | E | 1471 | 19 | 30 | 27949 | 44130 | Present Example |
| 10 | F | 1563 | 18 | 17 | 28134 | 26571 | Present Example |
| 11 | G | 1678 | 19 | 15 | 31882 | 25170 | Present Example |
| 12 | H | 1482 | 14 | 35 | 20748 | 51870 | Present Example |
| 13 | I | 1474 | 18 | 41 | 26532 | 60434 | Present Example |
| 14 | J | 1498 | 16 | 35 | 23968 | 52430 | Present Example |
| 15 | K | 1750 | 12 | 18 | 21000 | 31500 | Present Example |
| 16 | L | 1198 | 20 | 29 | 23960 | 34742 | Present Example |
| 17 | M | 992 | 25 | 40 | 24800 | 39680 | Present Example |

As is obvious from Table 3. the steel sheet samples manufactured according to the method of the present invention unanimously satisfied tensile strength of at least 980 MPa, (TS $\times$ T. EL) $\geq$ 20000 (MPa · %) and (TS $\times$ $\lambda$) $\geq$ 25000 (MPa · %). That is, it is confirmed from Table 3 that each of the steel sheet samples has satisfactorily high strength and excellent formability in particular excellent stretch-flangeability.

In contrast, sample No. 4, in which the annealing temperature failed to reach the (austenite + ferrite) two-phase region, did not obtain the desired microstructures of a steel sheet and had tensile strength (TS) below 980 MPa and (TS × T. EL) below 20000 (MPa · %), although (TS × λ) ≥ 25000 (MPa · %) and stretch-flangeability was relatively good therein. Each of sample No. 2 and sample No. 3, in which T1 was beyond the first temperature region, did not obtain the desired microstructures of a steel sheet and failed to satisfy at least one of (TS × T. EL) ≥ 20000 (MPa · %) and (TS × λ) ≥ 25000 (MPa · %), although it met tensile strength (TS) ≥ 980 MPa.

Sample No. 6, in which temperature of the coldest part of the steel sheet dropped below the target temperature during the retention time, i.e. was beyond the scope of the present invention, did not obtain the desired microstructures of a steel sheet and failed to satisfy (TS × T. EL) ≥ 20000 (MPa · %), although it met tensile strength (TS) ≥ 980 MPa. Sample No. 7, of which carbon content was beyond the scope of the present invention, did not obtain the desired microstructures of a steel sheet and failed to have the desired properties of the steel sheet.

(Example 2)

Further, samples Nos. 18-22 prepared by using steel type A shown in Table 1 were subjected to thermal treatment conditions show in Table 4, respectively. Table 5 shows results of investigating mechanical properties and variations therein for each of these samples. Variations in mechanical properties of each steel sheet sample were determined by: cutting 20 sheets of test materials (length in the rolling direction: 40mm × width: 250mm) from a portion (length of the rolling direction: 1000mm) of the steel sheet sample, wherein these test materials to be evaluated were originally evenly distributed (located) across the entire width of the steel sheet (i.e. from one edge via the center portion to the other edge of the steel sheet) and then cut and collected, respectively; obtaining JIS No. 5 test pieces from these 20 test materials, respectively; subjecting each of the respective JIS No. 5 test pieces to tensile test; and calculating standard deviations of tensile strength and T. EL. for each of the test pieces. Standard deviation σ of tensile strength ≤ 10 MPa and standard deviation σ of T. EL. ≤ 2.0% are evaluated to be good, respectively, in the present invention.

[Table 4]

Table 4

| Sample No. | Steel type | Annealing process | | Average cooling rate down to first temperature region | Target cooling stop temperature: T1 | Retention time of the coldest part | Temperature range of the coldest part | Ms | Ms-150°C . | Tempering process | | Note |
|---|---|---|---|---|---|---|---|---|---|---|---|---|
| | | Temperature | Time | | | | | | | Temperature | Time | |
| | | (°C) | (s) | (°C/s) | (°C) | (s) | (°C) | (°C) | (°C) | (°C) | (s) | |
| 18 | A | 900 | 250 | 20 | 250 | 18 | 251~253 | 325 | 175 | 400 | 120 | Present Example |
| 19 | A | 900 | 250 | 20 | 250 | 20 | 245~263 | 325 | 175 | 400 | 100 | Comparative Example |
| 20 | A | 900 | 300 | 20 | 300 | 2 | 300~302 | 325 | 175 | 400 | 100 | Comparative Example |
| 21 | A | 900 | 300 | 20 | 300 | 7 | 300~305 | 325 | 175 | 400 | 120 | Comparativ e Example |
| 22 | A | 900 | 300 | 20 | 300 | 30 | 300~308 | 325 | 175 | 400 | 120 | Present Example |

[Table 5]

Table 5

| Sample No. | Standard deviation σ of TS (MPa) | Standard deviation σ of T.EL. (%) | Note |
|---|---|---|---|
| 18 | 5 | 0.9 | Present Example |
| 19 | 12 | 1.9 | Comparative Example |
| 20 | 22 | 3.1 | Comparative Example |
| 21 | 15 | 2.5 | Comparative Example |
| 22 | 6 | 1.3 | Present Example |

As shown in Table 5, sample No. 18 and sample No. 22 subjected to the thermal treatment according to the present invention each satisfy standard deviation σ of tensile strength ≤ 10 MPa and standard deviation σ of T. EL. ≤ 2.0%, i.e. good stability in mechanical properties. In contrast, sample No. 19 having temperature of the coldest part of the steel sheet beyond the range of T1 to (T1 + 15°C) and samples Nos. 20 and 21 each having retention time of the coldest part of the steel sheet beyond the range of 15s to 1000s unanimously exhibit large variations, i.e. at least one of standard deviation σ of tensile strength > 10 MPa and standard deviation σ of T. EL. > 2.0%.

Further, the mechanical properties and variations therein were analyzed for each of the steel sheet samples according to the present invention shown in Table 3 in the same manner as described above in connection with samples Nos. 18-22. It was confirmed that these steel sheet samples according to the present invention each satisfied both standard deviation σ of tensile strength ≤ 10 MPa and standard deviation σ of T. EL. ≤ 2.0%, i.e. good mechanical stability.

Industrial Applicability

The high strength steel sheet according to the present invention, being excellent in formability and tensile strength (TS) and exhibiting good stability in mechanical properties, is very useful in the industrial fields of automobile, electric appliances and the like and in particular contributes to reducing weight of automobile body.

**Claims**

1. A method for manufacturing a high strength steel sheet, comprising the steps of: heating a steel sheet consisting of by mass %

C: 0.10% to 0.73%,
Si: 3.0% or less,
Mn 0.5% to 3.0%,
P: 0.1% or less,
S: 0.07% or less,
Al: 3.0% or less,
N: 0.010% or less, and

as remainder Fe and incidental impurities, and optionally at least one of the following elements:

Cr: 0.05% to 5.0%,
V: 0.005% to 1.0%,
Mo: 0.005% to 0.5%,
Ti: 0.01% to 0.1%,
Nb: 0.01% to 0.1%,
B: 0.0003% to 0.0050%,
Ni: 0.05% to 2.0%,
Cu: 0.05% to 2.0%,
Ca: 0.001 % to 0.005%, and
REM: 0.001 % to 0.005%

to either temperature in the austenite single phase region or temperature in the (austenite + ferrite) two-phase region with an annealing time of 15 to 600 seconds; cooling the steel sheet with an average cooling rate ≥ 3°C/s to cooling stop temperature as target temperature set within a cooling temperature region ranging from Ms to (Ms - 150°C) allow a portion of non-transformed austenite to proceed to martensitic transformation; and heating the sheet temperature to temper said martensite, wherein a retention time after raising the temperature is in the range of 5 to 1000 seconds, **characterized in that** the method further comprises retaining the coldest part in the sheet widthwise direction of the steel sheet at temperature in a temperature range from the cooling stop temperature as the target temperature to (the cooling stop temperature + 15°C) for a period ranging from 15 seconds to 100 seconds, wherein "Ms" represents martensitic transformation start temperature and said cooling temperature region is exclusive of Ms and inclusive of (Ms - 150°C).

2. The method for manufacturing a high strength steel sheet of claim 1, further comprising subjecting the steel sheet to hot dip galvanizing process or galvannealing process either: between completion of the heating process to temperature in either the austenite single phase region or the (austenite + ferrite) two-phase region and completion of the cooling process; or during the tempering process; or during a process after the tempering process.


**Patentansprüche**

1. Ein Verfahren zur Herstellung eines Stahlblechs mit hoher Festigkeit enthaltend die Schritte:

   Erwärmen eines Stahlblechs enthaltend in Massen%

   C: 0,10% bis 0,73%,
   Si: 3,0% oder weniger,
   Mn 0,5% bis 3,0%,
   P: 0,1 % oder weniger,
   S: 0,07% oder weniger,
   Al: 3,0% oder weniger,
   N: 0,010% oder weniger, und

   als Rest Fe und unvermeidbare Verunreinigungen, und wahlweise zumindest eines der folgenden Elemente:

   Cr: 0,05% bis 5,0%,
   V: 0,005% bis 1,0%,
   Mo: 0,005% bis 0,5%,
   Ti: 0,01% bis 0,1%,
   Nb: 0,01% bis 0,1%,
   B: 0,0003% bis 0,0050%,
   Ni: 0,05% bis 2,0%,
   Cu: 0,05% bis 2,0%,
   Ca: 0,001 % bis 0,005%, und
   REM: 0,001% bis 0,005%

   entweder bis zu einer Temperatur in einem Bereich einer Austenitphase als einzigen Phase oder bis zu einer Temperatur in dem (Austenit + Ferrit) zweiphasen Bereich mit einer Anlasszeit von 15 bis 600 Sekunden; Kühlen des Stahlbleches mit einer durchschnittlichen Kühlrate von ≥ 3°C/s bis zu einer Kühlstopptemperatur als Zieltemperatur, welche in einem Kühltemperaturbereich von Ms bis (Ms-150°C) liegt, um einem Teil des nicht umgewandelten Austenits zu erlauben bis zur martensitischen Umwandlung fortzuschreiten; und Erwärmen der Blechtemperatur um das Martensit zu tempern, wobei eine Verweilzeit nach dem Erhöhen der Temperatur im Bereich von 5 bis 1000 Sekunden liegt,
   **dadurch gekennzeichnet, dass**
   das Verfahren des Weiteren enthält ein Halten des kältesten Teils des Stahlbleches in der Breitenrichtung des Bleches auf einer Temperatur in einem Temperaturbereich von der Kühlstopptemperatur als der Zieltemperatur bis zu (der Kühlstopptemperatur + 15°C) für eine Dauer von 15 Sekunden bis 100 Sekunden, wobei "Ms" eine Starttemperatur der Martensitischen Umwandlung bedeutet und Ms aus dem Bereich der Kühltemperatur ausgeschlossen und (Ms-150°C) inkludiert ist.

**2.** Das Verfahren zur Herstellung eines Stahlblech mit hoher Festigkeit gemäß Anspruch 1, des Weiteren enthaltend Unterziehen des Stahlbleches eines Prozesses der Feuerverzinkung oder eines Prozesses des Verzinkens und nach dem Verzinken Wärmebehandelns (galvannealing) entweder:

zwischen Fertigstellung des Erwärmungsprozesses zu der Temperatur in einem Bereich der Austenitphase als einziger Phase oder dem (Austenit + Ferrit) zweiphasen Bereich und Fertigstellung des Kühlprozesses; oder während des Erwärmungsprozesses; oder während eines Prozesses nach dem Temperprozess.

## Revendications

**1.** Procédé de fabrication d'une tôle d'acier haute résistance, comprenant les étapes suivantes :

chauffage d'une tôle d'acier comprenant, en pourcentage massique,
C : 0,10 % à 0,73 %,
Si : 3,0 % ou moins,
Mn : 0,5 % à 3,0 %,
P : 0,1 % ou moins,
S : 0,07 % ou moins,
Al : 3,0 % ou moins,
N : 0,010 % ou moins, et
le reste étant constitué de Fe et d'éventuelles impuretés, et éventuellement d'au moins un des éléments suivants :

Cr : 0,05 % à 5,0 %,
V : 0,005 % à 1,0 %,
Mo : 0,005 % à 0, 5 %,
Ti : 0,01 % à 0,1 %,
Nb : 0,01 % à 0,1 %,
B : 0,0003 % à 0,0050 %,
Ni : 0,05 % à 2,0 %,
Cu : 0,05 % à 2,0 %,
Ca : 0,001 % à 0,005 %, et
RESTE : 0,001 % à 0,005 %
soit à une température dans la région à phase unique austénitique, soit à une température dans la région à deux phases (austénite + ferrite) avec un temps de recuit de 15 à 600 secondes ; refroidissement de la tôle d'acier à un taux de refroidissement moyen $\geq$ 3 °C/s à la température d'arrêt de refroidissement comme température cible établie dans une région de température de refroidissement qui s'étend de Ms à (Ms - 150 °C) permettant à une partie de l'austénite non transformée de poursuivre une transformation martensitique ; et élévation de la température de la tôle pour effectuer un recuit de ladite martensite, dans lequel un temps de rétention après l'élévation de la température est compris dans une plage de 5 à 1000 secondes, **caractérisé en ce que** le procédé comprend en outre la rétention de la partie la plus froide en direction de la largeur de tôle de la tôle en acier à une température comprise dans une plage de température allant depuis la température d'arrêt du refroidissement comme température cible jusqu'à une température égale à (la température d'arrêt du refroidissement + 15°C) durant une période allant de 15 secondes à 100 secondes,
dans lequel « Ms » représente une température de début de la transformation martensitique et ladite région de température de refroidissement exclut Ms et inclut (Ms - 150°C).

**2.** Procédé de fabrication d'une tôle d'acier à haute résistance selon la revendication 1, comprenant en outre la soumission de la tôle d'acier à un processus de galvanisation à chaud au trempé ou à un processus de recuit après galvanisation : entre la réalisation du processus de chauffage à une température soit dans la région à phase unique austénitique, soit dans la région à deux phases (austénite + ferrite), et la réalisation du processus de refroidissement ; ou durant le processus de recuit ; ou encore durant un processus après le processus de recuit.

# FIG. 1

(a)

(b)

(c)

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4235253 A
- JP 2004076114 A
- JP 11256273 A
- WO 2010029983 A